# EUROPEAN PATENT APPLICATION

(11) **EP 4 793 471 A1**
(43) Date of publication of application: **19.08.2026**
(21) Application number: 26156877.8
(22) Date of filing: 06.02.2026
(51) Int. Cl.: F01N 3/022, B01D 46/24, B01D 53/94, B01J 19/24, B01J 35/57, F01N 3/035, F01N 3/28, B01D 53/44, B01J 8/00, F23J 15/02

(54) **HONEYCOMB STRUCTURE**

(30) Priority: 17.02.2025 JP 2025023597
(71) Applicant: NGK INSULATORS, LTD., Nagoya-shi, Aichi 4678530 (JP)
(72) Inventor: NONOKAWA, Masami, Nagoya-shi, 4678530 (JP); KATO, Naruhide, Nagoya-shi, 4678530 (JP)
(74) Representative: Mewburn Ellis LLP

(57) **Abstract**

A honeycomb structure (**10**) comprises a plurality of flow channels (**2**,**12**) through which a fluid flows; a substrate (**8**) that comprises a first flow channel (**2**) of which outlet end surface is sealed and a second flow channel (**12**) of which inlet end surface is sealed; and a catalyst (**20**) that is inserted in at least one of the first and second flow channels (**2**,**12**). The catalyst is removably filled into the flow channels and may be provided in rod-shaped or pellet-shaped form with catalytic function by e.g. precious metal supported on a ceramic carrier.

## Description

### CROSS REFERENCE TO RELATED APPLICATION

This application claims priority to Japanese Patent Application No. 2025-23597 filed on February 17, 2025. The entire content of the priority application is incorporated herein by reference.

### TECHNICAL FIELD

The description herein discloses an art related to a honeycomb structure.

### BACKGROUND ART

JP 2014-172016 A describes a filter cloth having a catalytic function. The filter cloth of JP 2014-172016 A includes a bag-shaped filter cloth body and a catalyst layer supported within the filter cloth body. This filter cloth is used as a filter (bag filter) for exhaust gas purification. Specifically, exhaust gas is passed through the filter cloth from the outside to the inside thereof and is decomposed by a catalyst supported within fibers, and this decomposed gas is then released from within the filter cloth. Further, particles contained in the exhaust gas are captured by an outer surface of the filter cloth.

The filter cloth of JP 2014-172016 A needs to be replaced entirely when the function of the catalyst layer deteriorates or when clogging occurs in the filter cloth body. That is, even if the filter cloth body retains sufficient functionality as a filter, replacement of the entire filter cloth becomes necessary when the function of the catalyst layer deteriorates. Further, when clogging occurs in the filter cloth body, even if the catalyst layer retains a sufficient catalytic function, the entire filter cloth must be replaced. Due to this, the filter cloth of JP 2014-172016 A requires frequent replacement and is thus economically inefficient. The disclosure herein aims to provide a honeycomb structure configured to realize an economical filter with a catalytic function.

### SUMMARY

A first aspect of the art disclosed herein may be a honeycomb structure comprising: a plurality of flow channels through which a fluid flows; a substrate that comprises a first flow channel of which outlet end surface is sealed and a second flow channel of which inlet end surface is sealed; and a catalyst that is inserted in at least one of the first and second flow channels.

### BRIEF DESCRIPTION OF DRAWINGS

FIG. 1 schematically shows a honeycomb structure.
FIG. 2 shows a cross-section along a line II-II of FIG. 1.
FIG. 3 is a partially-enlarged view for explaining details of the honeycomb structure.
FIG. 4 is a diagram for explaining advantages of the honeycomb structure.
FIG. 5 shows results of experiment examples.

### DETAILED DESCRIPTION

A first aspect of the art disclosed herein may be a honeycomb structure comprising: a plurality of flow channels through which a fluid flows; a substrate that comprises a first flow channel of which outlet end surface is sealed and a second flow channel of which inlet end surface is sealed; and a catalyst that is inserted in at least one of the first and second flow channels.

A second aspect of the art disclosed herein may be the honeycomb structure of the first aspect, wherein the catalyst is spherical or cylindrical.

A third aspect of the art disclosed herein may be the honeycomb structure of the second aspect, wherein a diameter of the catalyst is 1 mm or more and 6 mm or less.

A fourth aspect of the art disclosed herein may be the honeycomb structure of any one of the first aspect to the third aspect, wherein the first and second flow channels are adjacent to each other.

A fifth aspect of the art disclosed herein may be the honeycomb structure of any one of the first aspect to the fourth aspect, wherein the catalyst is configured removable from the substrate.

A honeycomb structure disclosed herein can be used as a filter for purifying particles and toxic gases contained in exhaust gas. The honeycomb structure comprises a ceramic substrate and a catalyst inserted in the substrate. The substrate has a plurality of flow channels through which a fluid (e.g., the exhaust gas) flows. The flow channels extend in one direction and include a first flow channel of which fluid outlet end surface is sealed, and a second flow channel of which fluid inlet end surface is sealed. The first and second flow channels are separated by a partition wall.

The honeycomb structure is disposed on a fluid flow path. Specifically, the inlet end surface of the honeycomb structure is positioned upstream within the flow path, and the outlet end surface is positioned downstream within the flow path. In this case, when a fluid flows through the honeycomb structure, it flows into the honeycomb structure from the first flow channel, moves through the partition wall to the second flow channel, and flows out of the honeycomb structure from the second flow channel. As the fluid flows through the partition wall, particles contained in the fluid are captured by the partition wall, and the particles are thereby removed from the fluid. The first and second flow channels may have any cross-sectional shape, such as triangular, square, hexagonal, or circular. Strictly speaking, a structure having a plurality of hexagonal openings (flow channels) is termed a "honeycomb structure." However, in this specification, a structure (substrate) having a plurality of openings of the same shape is termed a "honeycomb structure."

As described above, the particles contained in the fluid are removed when the fluid moves from the first flow channel to the second flow channel. Due to this, it is desirable for the first flow channels and the second flow channels to be arranged alternately. That is, it is preferable for the first and second flow channels to be adjacent to each other. This enables efficient removal of the particles contained in the fluid.

The honeycomb structure disclosed herein may have a catalyst inserted in the first flow channel of the substrate and/or the second flow channel of the substrate. Here, the term "catalyst" as used herein may refer to a substance formed solely of materials possessing a catalytic function, or to a substance possessing the catalytic function (such as a precious metal) and supported on a carrier. Further, the catalyst may have any shape, and may be rod-shaped or pellet-shaped (spherical, cylindrical, prismatic, etc.). From the perspective of improving contact efficiency with the fluid, the shape of the catalyst is particularly preferred to be spherical or cylindrical. Ceramics such as alumina, silica, or zeolite may be used as the carrier.

A diameter of the catalyst may be any size that fits within the flow channels (including the first flow channel and the second flow channel) of the substrate. In considering a gas flow resistance expected upon neutralizing the toxic gases contained in the exhaust gas, it is preferable that a size of the flow channels in the substrate is a 6 mm × 6 mm square. In this case, it is preferable that the diameter of the catalyst is less than 6 mm. Specifically, when the catalyst is spherical or cylindrical, its diameter may be 1 mm or more and 6 mm or less. When the catalyst has a diameter of 1 mm or more, the catalyst can be suppressed from scattering upon inserting the same into the flow channels or when circulating the fluid (e.g., target gas) through the honeycomb structure. Further, this also suppresses an increase in a fluid flow resistance. Here, a catalyst particle size may be 2 mm or more, 3 mm or more, 4 mm or more, or 5 mm or more. Further, if the catalyst diameter is 6 mm or less, sufficient surface area can be ensured, and fluid processing efficiency (decomposition efficiency) can be improved. The diameter of the catalyst may be 5 mm or less, 4 mm or less, 3 mm or less, or 2 mm or less. When the catalyst is cylindrical, the diameter of the catalyst refers to the diameter of the exposed circular surface.

As described above, the catalyst may be inserted in the first flow channel, the second flow path, or both the first and second flow channels. However, it is more preferable for the catalyst to be inserted in the second flow channel. The second flow channel receives the fluid from which impurities (such as particles) have been removed by a partition wall. Due to this, if the catalyst is inserted in the second flow channel, impurities contained in the fluid are suppressed from adhering to the catalyst, by which a decrease in catalyst function can be suppressed.

The catalyst inserted in the flow channels (first flow channel and second flow channel) can be removed from the substrate. That is, the catalyst is not fixed to the substrate. Due to this, when maintaining or replacing the honeycomb structure, the catalyst can be removed from the substrate. Then, the substrate and the catalyst can be maintained separately. For example, when the partition wall of the substrate becomes clogged, the substrate may be regenerated (the clog may be resolved) by heating the substrate at a high temperature. Since the catalyst can be removed from the substrate before heating, the catalyst is not exposed to such a high temperature, and catalyst deterioration can thus be suppressed.

Further, when substrate regeneration is difficult, the catalyst can be removed from the substrate and reinserted into a new substrate. Alternatively, when the catalyst function has deteriorated to the point where regeneration is difficult, the catalyst can be removed from the substrate and a new catalyst can be reinserted into the substrate. That is, when the function of the honeycomb structure deteriorates, it is sufficient to replace only a part of the honeycomb structure (either the substrate or the catalyst) instead of replacing the entire honeycomb structure. The honeycomb structure disclosed herein can reduce cost, and thus is economical.

Further, when the substrate is to be regenerated, the fluid may be flowed in a reverse direction, i.e., from the outlet side to the inlet side of the honeycomb structure, to remove particles and other substances clogging the substrate. In this case too, since the substrate regeneration can be performed with the catalyst removed, the fluid flow resistance is reduced, and regeneration efficiency can be improved. Further, since the catalyst can be removed from the substrate, the types of the catalyst type can be changed according to the type of the fluid to be treated. That is, different types of fluids can be treated using a common substrate.

Moreover, the honeycomb structure disclosed herein can process high-temperature fluids (e.g., 900°C or higher) because the substrate is made of ceramics. For example, in case of a filter having a catalyst supported on a filter cloth, a low heat resistance of the filter cloth necessitates a step to cool the fluid that is being treated. The honeycomb structure disclosed herein can treat high-temperature fluids, by which the aforementioned cooling step can be omitted. Thus, the overall steps of the treatment system can be simplified.

### Embodiments

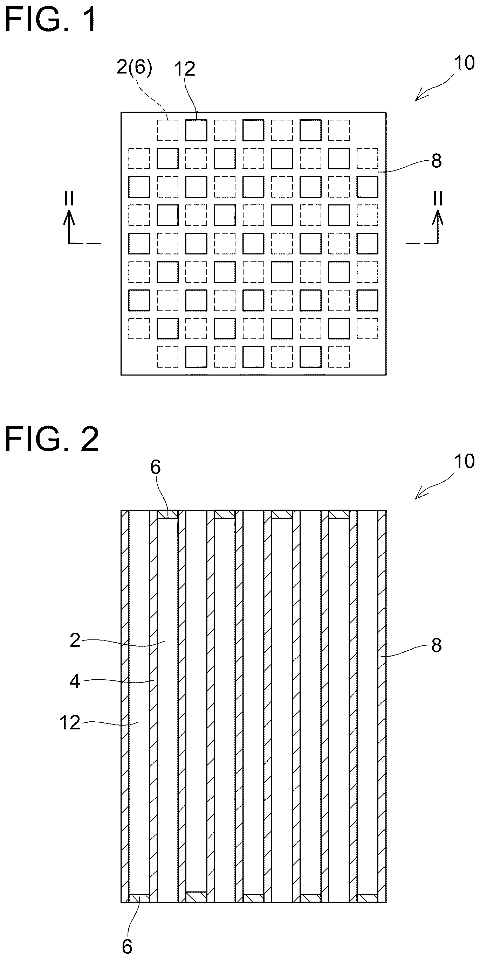

Referring to FIGS. 1 to 3, a honeycomb structure 10 will be described. FIG. 1 shows a view of the honeycomb structure 10 observed from a fluid outlet surface. The honeycomb structure 10 can be used as a filter for exhaust gas purification. As shown in FIG. 1, the outer shape of the honeycomb structure 10 is rectangular, and a plurality of first flow channels 2 and a plurality of second flow channels 12 are defined in a substrate 8. The substrate 8 is made of ceramic. In reality, the first flow channels 2 are sealed by the sealing materials 6, so no flow channels (openings) appear on an outlet surface. Further, although not shown, the second flow channels 12 are sealed by sealing materials 6 on an inlet surface of the honeycomb structure 10. As such, no flow channels (openings) of the second flow channels 12 appear on the inlet surface.

As evident from FIG. 1, the honeycomb structure 10 alternately disposes the first flow channels 2 and the second flow channels 12. That is, a second flow channel 12 is disposed adjacent to a first flow channel 2, and a first flow channel 2 is provided adjacent to a second flow channel 12. In reality, the honeycomb structure 10 is formed by defining a plurality of through holes in the substrate 8 and arranging the sealing material 6 at every other end of the through holes.

FIG. 2 shows a cross-sectional view of the honeycomb structure 10. In FIG. 2, depiction of catalysts 20 described later is omitted. As shown in FIG. 2, the substrate 8 has the plurality of first flow channels 2 and the plurality of second flow channels 12 defined therein. The first flow channels 2 and the second flow channels 12 are separated by partition walls 4. The partition walls 4 constitute the remaining portion of the substrate 8 after having defined the through holes (channels 2, 12). The sealing material 6 is provided on a fluid outlet side (upper side in FIG. 2) of each first channel 2. The sealing material 6 is also provided on a fluid inlet side (lower side in FIG. 2) of each second channel 12.

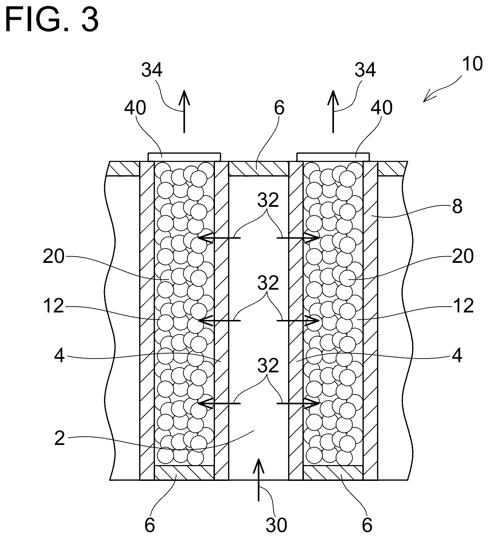

FIG. 3 shows an enlarged cross-sectional view of the honeycomb structure 10. In FIG. 3, the vertical scale is changed from that of FIG. 2 to explain the features of the honeycomb structure 10. As shown in FIG. 3, the second flow channels 12 have spherical catalysts 20 inserted therein. The catalysts 20 comprise a spherical alumina carrier on which a metal (e.g., platinum) having a catalytic function is supported. Further, a mesh cover 40 is provided at the opening portion (upper end surface) of each second flow channel 12. The covers 40 prevent the catalysts 20 from spilling out of the second flow channels 12. The covers 40 are made of metal.

When treating exhaust gas with the honeycomb structure 10, the openings of the first flow channels 2 are positioned upstream in a gas flow path, and the openings of the second flow channels 12 are positioned downstream in the gas flow path. By configuring as such, the exhaust gas flows into the first flow channels 2 as indicated by an arrow 30. The exhaust gas that has flowed into the first flow channels 2 moves through the partition walls 4 into the second flow channels 12, as indicated by arrows 32. As the exhaust gas moves from the first flow channels 2 to the second flow channels 12, impurities (such as particles) contained in the exhaust gas are removed by the partition walls 4. Due to this, the exhaust gas from which the impurities have been removed flows into the second flow channels 12.

The exhaust gas that has flowed into the second flow channels 12 is decomposed (neutralized or detoxified) by the catalysts 20. The decomposed exhaust gas flows out to the outside of the honeycomb structure 10 as indicated by arrows 34. Here, in the honeycomb structure 10, a size of the catalysts 20 is adjusted so that a flow resistance of the exhaust gas within the second flow channels 12 does not increase.

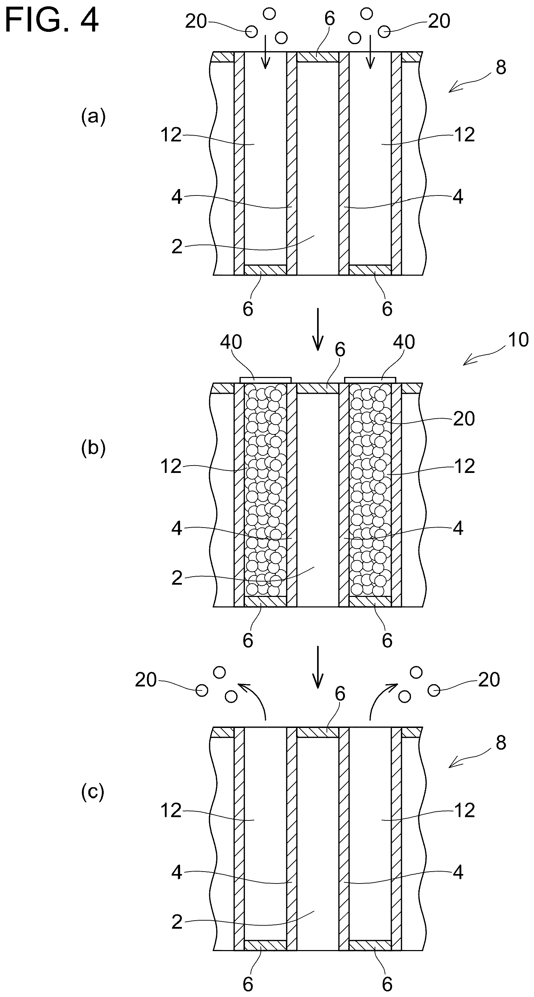

FIG. 4 shows a manufacturing method and a maintenance method for the honeycomb structure 10. First, the substrate 8 with the sealing materials 6 provided in the first flow channels 2 and the second flow channels 12 is prepared, and the catalysts 20 are introduced into the second flow channels 12 (a). Next, after having introduced the catalysts 20 into the second flow channels 12, the covers 40 re attached to the opening portions of the second flow channels 12 (b). The honeycomb structure 10 is thereby manufactured. The honeycomb structure 10 can be manufactured simply by introducing the catalysts 20 into the substrate 8; no process for supporting the catalysts 20 on the substrate 8 is required.

When performing maintenance on the honeycomb structure 10, the covers 40 are removed, and the catalysts 20 are removed from the second flow channels 12 (c). Subsequently, the substrate 8 is regenerated by either heat treating it or flowing the fluid from the second flow channels 12 into the first flow channels 2 (i.e., flowing the fluid in a reverse direction from the normal operation). The catalysts 20 are also regenerated by heat treatment or cleaning. Since the honeycomb structure 10 allows the substrate 8 and the catalysts 20 to be regenerated separately, they can be processed at temperatures suitable for their respective regeneration.

### Experiment Examples

Samples (honeycomb structures 10) were prepared by filling the substrate 8 (150 mm tall, 150 mm wide, 515 mm long, with flow channel dimension of 9 mm × 9 mm) with catalysts 20 of different shapes and sizes, and fluid flow resistance and removability of the catalysts 20 were evaluated. The shapes and sizes of the catalysts 20 were as follows.
Sample 1: Spherical catalyst with a diameter of 0.5 mm
Sample 2: Spherical catalyst with a diameter of 1 mm
Sample 3: Spherical catalyst with a diameter of 2 mm
Sample 4: Spherical catalyst with a diameter of 3 mm
Sample 5: Spherical catalyst with a diameter of 4 mm
Sample 6: Spherical catalyst with a diameter of 5.5 mm
Sample 7: Cylindrical catalyst with diameter 3 mm and height 3 mm

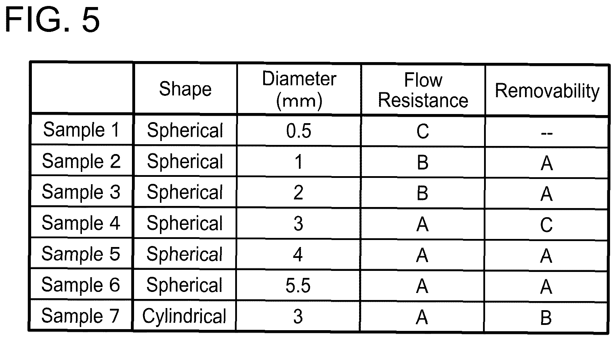

The fluid flow resistance was evaluated as a differential pressure between a pressure required to flow a constant volume of fluid through the sample inserted with catalysts 20 (honeycomb structure 10) and the pressure required to flow a constant volume of fluid through a sample not inserted with catalyst 20 (substrate 8). Samples with a differential pressure equal to or less than the allowable value were rated "A", and samples with a differential pressure exceeding the allowable value were rated "B". Further, samples in which the fluid could not be flowed were rated "C". The results are shown in FIG. 5.

The removability of the catalysts 20 was evaluated as follows: samples in which the catalysts 20 could be completely removed from the second flow channels 12 when the covers 40 were removed and the second flow channels 12 was positioned downward were rated "A". Samples in which the catalysts 20 could be completely removed from the second flow channels 12 when the covers 40 were removed, the second flow channels 12 were positioned downward, and vibration was applied were rated "B". Further, samples in which the catalysts 20 could not be removed even after having applied vibration with the second flow channels 12 positioned downward with the covers 40 removed, and the catalysts 20 could be removed only after having inserted a jig (rod) into the second flow channels 12, were rated "C". The results are shown in FIG. 5.

As shown in FIG. 5, the fluid could not flow through Sample 1 with the diameter of 0.5 mm (less than 1 mm). Further, in Sample 1, a part of the catalysts 20 could not be removed because a part of the catalysts 20 became stuck inside the second flow channels 12. Samples with diameters of 1 to 2 mm (Samples 2 and 3) received a B rating for flow resistance but an A rating for removability. It has been confirmed that adjusting the diameter of the catalysts 20 to 1 to 2 mm enables realization of a honeycomb structure 10 with excellent maintenance performance. Further, samples with diameters of 3 to 5.5 mm (Samples 4 to 6) were confirmed to have low flow resistance and yielded favorable results (Grade A). Specifically, spherical samples with diameters of 4 mm and 5.5 mm (Samples 5 and 6), as well as a cylindrical sample with a diameter of 3 mm, were confirmed to also have good removability (Grade A or B). Due to this, it has been confirmed that a catalyst diameter of 1 mm or more and 6 mm or less is preferred. Using these catalysts enables the realization of the honeycomb structure 10 with excellent maintenance characteristics and low fluid flow resistance.

The above examples described the honeycomb structure 10 with the rectangular outer shape for the substrate 8. However, the outer shape of the honeycomb structure (substrate) is not limited to rectangular, and it may be circular, for example.

In the above embodiment, the honeycomb structure 10 in which the catalysts 20 are inserted in the second flow channels 12 has been explained. However, the technology disclosed herein can also be applied to a configuration in which the catalysts 20 are inserted in the first flow channels 2, or to a configuration in which the catalysts 20 are inserted in both the first flow channels 2 and the second flow channels 12. The important point is that the catalysts 20 are not fixed to the substrate 8, and that the catalysts 20 are inserted into the flow channels 2 and 20.

Further, in the above embodiment, a case in which the covers 40 are provided at the opening portions of the flow channels (second flow channel 12) inserted with catalysts, has been explained. However, a cover may be provided to cover the entire surface where the openings of the catalyst-inserted flow channels exist. For example, in the honeycomb structure 10, the entire outlet end surface may be covered with a mesh cover. Alternatively, the entire surfaces of the honeycomb structure may be covered with a mesh cover.

Further, the above example described the catalysts 20 in which a metal having the catalytic functionality is supported on a spherical carrier. However, the shape of the carrier is not limited to spherical; it may be, for example, rod-shaped, cylindrical, etc. If the shape of the carrier (catalyst) is rod-shaped, the process of filling the flow path with catalyst can be simplified. Further, if the shape of the carrier (catalyst) is cylindrical, it becomes easier to ensure gaps between the catalysts, thereby reducing the fluid flow resistance.

Further, the above examples described using the honeycomb structure 10 as a filter for purifying toxic gases such as exhaust gases. However, the honeycomb structure 10 can be utilized for any purpose involving decomposition of organic components, combustible gases, etc. For example, it can be used to decompose organic components contained in gas and recover useful gases such as hydrogen. Alternatively, it can be used to decompose or react polymer compounds to produce raw materials for plastics. Since the substrate 8 of the honeycomb structure 10 is made of ceramics, it is particularly suitable for applications requiring the decomposition or reaction of fluids at high temperatures.

While specific examples of the present disclosure have been described above in detail, these examples are merely illustrative and place no limitation on the scope of the patent claims. The technology described in the patent claims also encompasses various changes and modifications to the specific examples described above. The technical elements explained in the present description or drawings provide technical utility either independently or through various combinations. The present disclosure is not limited to the combinations described at the time the claims are filed. Further, the purpose of the examples illustrated by the present description or drawings is to satisfy multiple objectives simultaneously, and satisfying any one of those objectives gives technical utility to the present disclosure.

## Claims

1. A honeycomb structure (10) comprising:
a plurality of flow channels (2,12) through which a fluid flows;
a substrate (8) that comprises a first flow channel (2) of which outlet end surface is sealed and a second flow channel (12) of which inlet end surface is sealed; and
a catalyst (20) that is inserted in at least one of the first and second flow channels (2,12).

2. The honeycomb structure (10) according to claim 1, wherein the catalyst (20) is spherical or cylindrical.

3. The honeycomb structure (10) according to claim 2, wherein a diameter of the catalyst (20) is 1 mm or more and 6 mm or less.

4. The honeycomb structure (10) according to any one of claims 1 to 3, wherein the first and second flow channels (2,12) are adjacent to each other.

5. The honeycomb structure (10) according to any one of claims 1 to 4, wherein the catalyst (20) is configured removable from the substrate (20).
